# EUROPÄISCHE PATENTSCHRIFT

(11) **EP 2 054 678 B1**
(45) Veröffentlichungstag und Bekanntmachung des Hinweises auf die Patenterteilung: **27.07.2016**
(21) Anmeldenummer: 07819618.5
(22) Anmeldetag: 06.11.2007
(51) Int. Cl.: F25D 19/00, F25B 21/00

(54) **KÜHL- UND/ODER GEFRIERGERÄT**
REFRIGERATOR AND/OR FREEZER
APPAREIL DE REFROIDISSEMENT ET/OU DE CONGÉLATION

(30) Priorität: 09.11.2006 DE 202006017168 U
(43) Veröffentlichungstag der Anmeldung: 06.05.2009
(73) Patentinhaber: Liebherr-Hausgeräte Ochsenhausen GmbH, 88416 Ochsenhausen (DE)
(72) Erfinder: WIEST, Matthias, 88416 Hattenburg 33 (DE); SIEGEL, Didier, 88416 Steinhausen (DE)
(74) Vertreter: Herrmann, Uwe
(86) Internationale Anmeldenummer: PCT/EP2007/009598
(87) Internationale Veröffentlichungsnummer: WO 2008/055649

(56) Entgegenhaltungen:
- WO-A-2007/055506
- FR-A- 2 861 455

## Beschreibung

Die vorliegende Erfindung betrifft ein Kühl- und/oder Gefriergerät mit einem Innenbehälter zur Aufnahme von Kühl- und/oder Gefriergut, mit einem magnetischen Kühler sowie mit einem Wärmetauscher zur Kühlung des Innenraumes des Innenbehälters, wobei sich der Wärmetauscher auf der nach außen gerichteten Seite des Innenbehälters befindet.

Aus dem Stand der Technik sind Kühl- und/oder Gefriergeräte herkömmlicher Art bekannt, die über einen Kältemittelkreislauf mit Verdichter, Verflüssiger, Drossel und Verdampfer verfügen, wobei der Verdampfer dazu dient, den Innenraum durch Verdampfung des Kältemittels zu kühlen.

Aus dem Stand der Technik ist es ferner bekannt, zur Kühlung des Innenraums eines Kühl- und/oder Gefriergerätes einen sogenannten magnetischen Kühler einzusetzen. Für derartige magnetische Kühler sind unterschiedliche Funktionsprinzipien bekannt.

Beispielsweise kann der magnetische Kühler aus einem magnetokalorischen Material aufgebaut sein, das bei seiner Magnetisierung erwärmt wird und bei seiner Entmagnetisierung eine Abkühlung erfährt. Strömt das Wärmeträgermedium durch den magnetisierten und damit erwärmten Teil des magnetischen Kühlers, wird es erwärmt. Das Wärmeträgermedium durchströmt sodann einen warmen Wärmetauscher, der sich beispielsweise auf der Außenseite des Gerätes befindet und der durch ein geeignetes Kühlmedium gekühlt wird.

Das den entmagnetisierten und damit abgekühlten Bereich des magnetischen Kühlers durchströmende Wärmeträgermedium wird abgekühlt. Das auf diese Weise gekühlte Wärmeträgermedium gelangt sodann zu dem sogenannten kalten Wärmetauscher, der derart angeordnet ist, dass er den Innenraum des Gerätes kühlt.

Dabei ist es bekannt, Magnete relativ zu dem magnetischen Kühler bzw. dessen Wärmetauscher zu bewegen oder Magnete periodisch ein- und auszuschalten. Die genannte Bewegung kann linear oder auch rotatorisch erfolgen. Auch ist es denkbar, nicht die Magnete, sondern den Wärmetauscher des magnetischen Kühlers relativ zum Magneten zu bewegen.

Nach einem weiteren Funktionsprinzip ist vorgesehen, dass Partikel aus magnetokalorischem Material in das Wärmeträgermedium eingebracht werden und das Wärmeträgermedium dann dadurch erwärmt wird, dass das magnetokalorische Material magnetisiert wird und sich damit erwärmt. Eine Abkühlung wird dadurch erzielt, dass das magnetokalorische Material entmagnetisiert wird, wodurch es zu einer Temperaturverringerung des magnetokalorischen Materials und auch des Wärmeträgermediums kommt.

Von der Erfindung ist jede beliebige Art der Ausführung bzw. des Funktionsprinzips eines magnetischen Kühlers umfasst.

Stand der Technik ist es, dass der Wärmetauscher in Form einer Aluminiumplatine (Rohr auf Blech oder Roll-Bond) auf der Rückwand des Innenbehälters, d. h. des Kühlgutbehälters, im Schaum mit einem Doppelklebeband fixiert wird. Um eine mechanisch und thermisch hinreichende Verbindung zwischen dem Wärmetauscher und dem Innenbehälter zu erhalten, muss der Wärmetauscher maschinell aufgepresst werden.

Der Wärmeübergang findet somit zwischen Aluminium, dem genannten Doppelklebeband und dem Innenbehälter statt.

Die FR 2 861 455 A1 offenbart ein Kühlgerät mit einer im Kühlraum angeordneten Zwischenwand, wobei die Zwischenwand den Kühlraum in einen Nutzraum und in einen Verdampferraum trennt. Die WO 2007/055506 A1 offenbart ein Kühlgerät mit einer magnetokalorischen Wärmepumpe. Aus der GB 658 349 ist schließlich ein Kühl- und Gefriergerät bekannt, bei dem der im Gefrierteil angeordnete Verdampfer Kältemittelkanäle aufweist, die an der Außenseite des Innenbehälters angeordnet sind. Die FR 2 861 455 A1 offenbart ein Kühl- und/oder Geffriergerät mit dem Oberbegriff des Anspruchs 1.

Der vorliegenden Erfindung liegt die Aufgabe zugrunde, ein Kühl- und/oder Gefriergerät der eingangs genannten Art dahingehend weiterbilden, dass dieses vergleichsweise einfach aufgebaut ist und eine effiziente Kühlung ermöglicht.

Diese Aufgabe wird durch ein Kühl- und/oder Gefriergerät mit den Merkmalen des Anspruchs 1 gelöst.

Erfindungsgemäß ist gemäß Anspruch 1 vorgesehen, dass der Wärmetauscher als Wanne ausgeführt ist, die direkt auf dem Innenbehälter unmittelbar fixiert ist, sodass das Wärmeträgermedium zwischen dem Innenbehälter und der Wanne fließt und der Wärmetransport aus dem Innenraum des Innenbehälters zum Wärmeträgermedium nur über die Wandung des Innenbehälters erfolgt. Der Wärmeübergang findet abweichend von der aus dem Stand der Technik bekannten Anordnung demzufolge nur über eine Wandung statt und ist daher besonders effektiv.

Die Wandung bzw. die Wandungen, durch die die Wärme aus dem Geräteinnenraum an das Wärmeträgermedium übertragen wird, kann Mittel aufweisen, durch die der Wärmeübergang verbessert wird. In Betracht kommt eine geeignete Beschichtung oder das Vorliegen eines den Wärmeübergang verbessernden Mediums in die Wandung. Denkbar ist das Einbringen von Feststoffen, die eine gute Wärmeleitfähigkeit aufweisen. Vorzugsweise ist der Einsatz von Metallen oder Metalllegierungen vorgesehen. Denkbar ist es somit beispielsweise, dass die Wandung Metallpartikel und/oder sonstige eine gute Wärmeleitfähigkeit aufweisende Feststoffe aufweist, die in dem Kunststoffmaterial verteilt sind und die den Zweck haben, den Wärmedurchgang durch die Wand zu verbessern.

Erfindungsgemäß steht der Wärmetauscher unmittelbar mit dem Innenbehälter in Verbindung. Eine derartige unmittelbare Verbindung kann beispielsweise durch ein Ultraschallverfahren realisiert werden.

Der Wärmetauscher ist als Wanne ausgeführt. Diese Wanne kann beliebig ausgeführt bzw. verformt sein.

Denkbar ist beispielsweise, dass der Wärmetauscher derart ausgeführt ist, dass der Wärmeträger durch einen Kanal bzw. durch ein Kanalsystem strömen muss. Dabei ist das Kanalsystem derart ausgeführt, dass der Kanal unmittelbar an den Innenbehälter angrenzt, so dass der Wärmeübergang nur über den Innenbehälter stattfindet. Da bei dieser Ausführungsform der Erfindung der Wärmetauscher nicht mittelbar, beispielsweise nicht mittels eines Klebebandes, sondern unmittelbar mit dem Innenbehälter in Verbindung steht, ist der Wärmeübergang nur über das Innenbehältermaterial vorzunehmen, wodurch sich eine besonders effiziente Kühlung ergibt.

Wie oben bereits ausgeführt, kann der Wärmetauscher mittels Ultraschall an dem Innenbehälter fixiert sein. Selbstverständlich sind auch andere Verfahren denkbar, mittels derer eine unmittelbare Verbindung zwischen Wärmetauscher einerseits und dem Innenbehälter andererseits vorgenommen werden kann.

In weiterer Ausgestaltung der Erfindung ist vorgesehen, dass der Wärmetauscher mit Rohren zur Zu- und Ableitung des Wärmeträgermediums in den bzw. aus dem Wärmetauscher in Verbindung steht und dass eines oder beide dieser Rohre aus Kunststoff besteht. Vorzugsweise ist vorgesehen, dass der Wärmetauscher überwiegend oder ausschließlich aus Kunststoff besteht.

Die Ausführung der Verbindungsrohre zwischen dem kalten Wärmetauscher und dem magnetischen Kühler aus Kunststoff spart ebenso wie die Ausführung des Wärmetauschers aus Kunststoff Kosten. Abgesehen davon, ist das Recycling von PS-Material günstiger als das von Aluminium.

Ein Ausführungsbeispiel der Erfindung wird im Folgenden dargestellt.

Der Wärmetauscher der kalten Seite besteht aus einer Art Wanne, die mittels Ultraschallverfahren direkt auf dem Innenbehälter, d. h. dem Kühlgutbehälter fixiert ist. Der Wärmeträger fließt zwischen dem Kühlgutbehälter und der Wärmetauscherwanne.

Die Wärmetauscherwanne kann beliebig verformt sein, so dass der Wärmeträger beispielsweise durch eine Art Kanal strömen muss.

Der Wärmeübergang findet nur über den Innenbehälter statt.

Die oben genannte Art von Wärmetauscher ist bei Kühl- und/oder Gefriergeräten im Zusammenhang mit einem magnetischen Kühler möglich, weil kein nennenswerter Überdruck im System herrscht.

Wie oben ausgeführt, können außerdem die Verbindungsrohre zum magnetischen Kühler in Kunststoff ausgeführt werden. Dies spart Kosten, abgesehen davon ist das Recycling der verwendeten Materialien vergleichsweise günstig, so dass sich auch hieraus ein Kostenvorteil ergibt.

## Patentansprüche

1. Kühl- und/oder Gefriergerät mit einem Innenbehälter zur Aufnahme von Kühl- und/oder Gefriergut, mit einem magnetischen Kühler sowie mit einem Wärmetauscher mit einem darin befindlichen Wärmeträgermedium zur Kühlung des Innenraums des Innenbehälters, wobei sich der Wärmetauscher auf der nach außen gerichteten Seite des Innenbehälters befindet,
**dadurch gekennzeichnet,**
**dass** der Wärmetauscher als Wanne ausgeführt ist, die unmittelbar auf dem Innenbehälter fixiert ist, sodass das Wärmeträgermedium zwischen dem Innenbehälter und der Wanne fließt und der Wärmetransport aus dem Innenraum des Innenbehälters zum Wärmeträgermedium nur über die Wandung des Innenbehälters erfolgt.

2. Kühl- und/oder Gefriergerät nach Anspruch 1, **dadurch gekennzeichnet, dass** der Wärmetauscher Kanäle oder Rohre zur Führung des Wärmeträgermediums aufweist.

3. Kühl- und/oder Gefriergerät nach einem der vorhergehenden Ansprüche, **dadurch gekennzeichnet, dass** die Wanne derart angeordnet ist, dass sie bereichsweise von einer Wärmedämmung umgeben ist.

4. Kühl- und/oder Gefriergerät nach einem der vorhergehenden Ansprüche, **dadurch gekennzeichnet, dass** die Wanne mittels Ultraschall an dem Innenbehälter fixiert ist.

5. Kühl- und/oder Gefriergerät nach einem der vorhergehenden Ansprüche, **dadurch gekennzeichnet, dass** die Wanne mit Rohren zur Zu- und Ableitung des Wärmeträgermediums in den bzw. aus der Wanne in Verbindung steht und dass eines oder beide dieser Rohre aus Kunststoff bestehen.

6. Kühl- und/oder Gefriergerät nach einem der vorhergehenden Ansprüche, **dadurch gekennzeichnet, dass** die Wanne überwiegend oder ausschließlich aus Kunststoff besteht.

7. Kühl- und/oder Gefriergerät nach einem der vorhergehenden Ansprüche, **dadurch gekennzeichnet, dass** die Wandung des Innenbehälters, durch die die Wärme aus dem Geräteinnenraum an das Wärmeträgermedium übertragen wird, Mittel aufweist, durch die der Wärmeübergang verbessert wird.

## Claims

1. A refrigerator unit and/or a freezer unit having an inner container for the reception of refrigerated goods and/or frozen goods, having a magnetic cooler as well as having a heat exchanger with a heat carrier medium located therein for the refrigeration of the inner space of the inner container, wherein the heat exchanger is located on the side of the inner container directed outwardly,
**characterized in that**
the heat exchanger is made as a pan which is fixed directly on the inner container so that the heat carrier medium flows between the inner container and the pan and the heat transfer from the inner space of the inner container to the heat carrier medium only takes place via the wall of the inner container.

2. A refrigerator unit and/or a freezer unit in accordance with claim 1, **characterized in that** the heat exchanger has passages or pipes for the conducting of the heat carrier medium.

3. A refrigerator unit and/or a freezer unit in accordance with one of the preceding claims, **characterized in that** the pan is arranged such that it is surrounded by heat insulation region-wise.

4. A refrigerator unit and/or a freezer unit in accordance with one of the preceding claims, **characterized in that** the pan is fixed on the inner container by means of ultrasound.

5. A refrigerator unit and/or a freezer unit in accordance with one of the preceding claims, **characterized in that** the pan is in communication with pipes for the supply and drainage of the heat carrier medium into or out of the pan; and **in that** one or both of these pipes are made from plastic.

6. A refrigerator unit and/or a freezer unit in accordance with one of the preceding claims, **characterized in that** the pan is primarily or exclusively made from plastic.

7. A refrigerator unit and/or a freezer unit in accordance with one of the preceding claims, **characterized in that** the wall of the inner container through which the heat is transferred from the inner space of the unit to the heat carrier medium has means by which the heat transfer is improved.

## Revendications

1. Appareil de refroidissement et/ou de congélation comprenant un contenant intérieur destiné à recevoir des produits à refroidir et/ou à congeler, un réfrigérant magnétique ainsi qu'un échangeur de chaleur dans lequel se trouve un fluide caloporteur destiné à refroidir l'espace intérieur du contenant intérieur, l'échangeur de chaleur se trouvant du côté orienté vers l'extérieur du contenant intérieur,
**caractérisé en ce que**
l'échangeur de chaleur se présente sous la forme d'une cuve, qui est fixée directement sur le contenant intérieur, de telle manière que le fluide caloporteur coule entre le contenant intérieur et la cuve et que le transport de la chaleur se fait de l'espace intérieur du contenant intérieur au fluide caloporteur uniquement par le biais de la paroi du contenant intérieur.

2. Appareil de refroidissement et/ou de congélation selon la revendication 1, **caractérisé en ce que** l'échangeur de chaleur comporte des conduites ou tuyaux destinés à guider le fluide caloporteur.

3. Appareil de refroidissement et/ou de congélation selon l'une des revendications précédentes, **caractérisé en ce que** la cuve est disposée de telle manière qu'elle est entourée d'une isolation thermique sur certaines parties.

4. Appareil de refroidissement et/ou de congélation selon l'une des revendications précédentes, **caractérisé en ce que** la cuve est fixée au contenant intérieur par ultrasons.

5. Appareil de refroidissement et/ou de congélation selon l'une des revendications précédentes, **caractérisé en ce que** la cuve est en liaison avec des tuyaux pour l'alimentation du fluide caloporteur dans la cuve et sa décharge de celle-ci, et **en ce qu'**un de ces tuyaux ou les deux se composent de matière plastique.

6. Appareil de refroidissement et/ou de congélation selon l'une des revendications précédentes, **caractérisé en ce que** la cuve se compose principalement ou exclusivement de matière plastique.

7. Appareil de refroidissement et/ou de congélation selon l'une des revendications précédentes, **caractérisé en ce que** la paroi du contenant intérieur, à travers laquelle la chaleur est transférée de l'espace intérieur de l'appareil au fluide caloporteur, comporte des moyens qui améliorent le transfert de la chaleur.
